# EUROPEAN PATENT SPECIFICATION

(11) **EP 4 504 503 B1**
(45) Date of publication and mention of the grant of the patent: **04.11.2026**
(21) Application number: 22936672.9
(22) Date of filing: 02.08.2022
(51) Int. Cl.: B31B 50/16, A21B 5/02, A23G 9/28, A23G 9/50, A23P 30/10, B31B 50/04, B31B 50/06, B31B 50/28, B31C 7/08, B65B 5/08

(54) **CORNET CONE PACKAGE PRODUCTION MACHINE WITH VERTICAL FEEDING**
MASCHINE ZUR HERSTELLUNG VON MAISTEICHKEGELVERPACKUNGEN MIT VERTIKALER ZUFÜHRUNG
MACHINE DE PRODUCTION D'EMBALLAGE CONIQUE DE TYPE CORNET À ALIMENTATION VERTICALE

(30) Priority: 08.04.2022 TR 202205633
(43) Date of publication of application: 12.02.2025
(73) Proprietor: Mondi Kale Nobel Ambalaj Sanayi Ve Ticaret Anonim Sirketi, 34000 Bakirkoy/Istanbul (TR)
(72) Inventor: SAHIN, Umit, Luleburgaz/ Kirklareli (TR); IPEK, Mehmet Ulas, Bakirkoy/Istanbul (TR)
(74) Representative: Andrejewski - Honke Patent- und Rechtsanwälte Partnerschaft mbB
(86) International application number: PCT/TR2022/050808
(87) International publication number: WO 2023/195941

(56) References cited:
- WO-A1-2021/096452
- WO-A1-2021/096452
- JP-A- S59 167 405
- JP-A- S59 167 405
- US-A- 2 612 016
- US-A- 4 259 827

## Description

### Technical Field

The invention is related to a cornet cone package production machine with vertical feeding used in the production of cornet cone packages used in the packaging of cornet-type ice-creams.

The invention is particularly related to a cornet cone package production machine with vertical feeding which provides for the cornet cone packages to be vertically fed and brought into a cone shape by being crimped.

### Prior Art

Cornet-type ice-creams are among the top popular ice-creams frequently consumed. These ice-creams basically have conically shaped cornets filled with ice-creams having contents such as chocolate, toppings, fruits, nuts etc. Said cornets are sold by being placed in sleeve-like packages that cover the cornet part.

In the art, the standard cornet cone packages are cut into specific shapes before production and produced by being crimped into a conical shape in crimping machines. For this purpose, the cornet cone packages cut are stacked in order to be transferred to the crimping machines after the cutting process. The crimping machines shape the specifically shaped packages that are stacked into cones by crimping the same through rotation and form cone packages that are suitable for cornet cones. However, during the transmission of the specifically shaped packages to the crimping machine, problems such as deformation, tearing, and flying away are encountered and errors occur in production.

As a result of the research of the literature, document number EP1864791 can be given as an example of the known state of the art. Said document is related to the procedure for the production of conical ice-cream packages. In said invention, the production of the cornet cone packages after a four-step procedure has been mentioned. In the first stage the straight package bobbin is divided into specifically shaped stripes by means of a custom knife structure and having been divided into specific shapes the bobbin comes out of the machine in two ways as plane or reverse. In the second stage the reverse stripe is turned by a turning machine and readied for the cutting machine. In the third stage the bobbins prepared are transferred to the crimping machine by being subjected to a cutting procedure and in the fourth stage, the pieces coming out of the cutting machine are transformed into cone packages by crimping. In said invention, a method which produces cone packages with separate machines has been described. This requires multiple processes for various stages in the cone package production. WO 2021/096452 relates to a cutting, crimping and stacking machine for producing conical cornet cone packages, used for ice cream, which is capable of performing automatically cutting, crimping and stacking the conical cornet cone packages by itself. It discloses: a cutting unit for cutting a sheet from a roller into pieces of predetermined shape and size; transfer and conveying units for moving the cut pieces to a crimping station; upper and lower conical crimper moulds which rotate to form conical packages; glue application and trimming elements and a collecting chamber in which the finished conical packages are stacked.

In consequence, the presence of the above-mentioned problems and inefficiency of the present solutions requires a development in the related technical field.

### Purpose of the Invention

The present invention is related to a cornet cone package production machine with vertical feeding that eliminates the above-mentioned disadvantages and brings new advantages to the related technical field.

The main purpose of the invention is to present a production machine which provides that the cornet cone packages are vertically fed and brought to a cone shape by being crimped.

The purpose of the invention is to provide that the cornet cone packages are carried by being stacked on top of each other vertically and without getting caught or interlapped, crimped by being pushed in between two conical crimpers, and stacked within each other by being brought into a cone shape after the crimping.

Another purpose of the invention is to provide that the production is carried out without errors with the cornet cone packages that are stacked on top of each other vertically being transferred properly in between the crimpers.

Another purpose of the invention is to provide that the specifically shaped cornet cone packages are stacked over a single machine, transferred automatically to the crimping procedure, brought to a cone shape by being crimped and packages that are brought into a cone shape are stacked within each other.

In order to fulfill all the purposes that are mentioned above and that can be inferred from the detailed description; the invention is a production machine which is used in producing the cornet cone packages used in the packaging of cornet-type ice-creams and which provides for the cornet cone packages to be vertically fed and brought into a cone shape by being crimped, comprising
- a package fixing bottom set which stacks the cornet cone packages on top of each other,
- a first conveyor belt with linear motion which carries the cornet cone packages by pulling them individually on the lower surface of the package fixing bottom set,
- a semicircle disk in the form of a half circle which is located at the end of the first conveyor belt, and which has a rotational movement that holds and turns the cornet cone packages at certain intervals,
- a second conveyor belt which is positioned perpendicularly to the first conveyor belt, and which carries the cornet cone packages turned by the semicircle disk,
- lower conical crimper and upper conical crimper which are located at the end of the second conveyor belt, and which crimp the turned cornet cone packages and bring them into conical cone packages, having reverse rotational movements,
- cone stacking unit which stacks the conical cone packages produced by means of the lower conical crimper and upper conical crimper within each other,
- cone transmission belt which pulls the conical cone packages into the cone stacking unit from the lower conical crimper and upper conical crimper,
- and a cone holder which keeps the conical cone packages within each other on the cone transmission belt.

The structural and characteristic features and all the advantages of the invention will be understood more clearly thanks to the figures given below and the detailed description written by making references to these figures. Therefore, the evaluation should be made in consideration of these figures and the detailed description.

### Figures Aiding the Description of the Invention

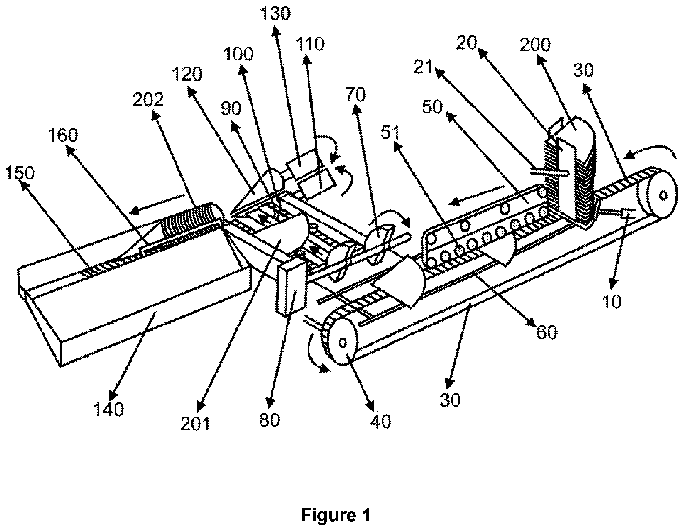

**Figure 1****:** Representative view of the cornet cone package production machine of the invention.

### Description of the Reference Parts

**10.** Package fixing bottom set
**20.** Package fixing side set
**21.** Side adjustment arm
**30.** First conveyor belt
**40.** Conveyor drive gear
**50.** Package upper transmission system
**51.** Disk
**60.** Package holder
**70.** Semicircle disk
**80.** Disk motor
**90.** Second conveyor belt
**100.** Lower conical crimper
**110.** Lower conical crimper motor
**120.** Upper conical crimper
**130.** Upper conical crimper motor
**140.** Cone stacking unit
**150.** Cone transmission belt
**160.** Cone holder
**200.** Cornet cone package
**201.** Turned cone package
**202.** Conical cone package

### Detailed Description of the Invention

In this detailed description the preferred alternatives of the production machine of the invention are described only for a better understanding of the subject and in the way to create no limiting effect whatsoever.

In Figure 1, representational view of the production machine of the invention has been given. Accordingly the production machine basically comprises a package fixing bottom set (10) which stacks the cornet cone packages (200) on top of each other, package fixing side set (20) which holds the cornet cone packages (200) on the package fixing bottom set (10) from their side surfaces, a first conveyor belt (30) with linear motion which carries the cornet cone packages (200) by pulling them individually on the lower surface of the package fixing bottom set (10), conveyor drive gear (40) which has the rotational movement that moves the first conveyor belt (30) linearly, a package transmission upper system (50) which advances the cornet cone packages (200) on the first conveyor belt (30), package holder (60) which supports the cornet cone packages (200) from under the first conveyor belt (30), a semicircle disk (70) which holds the cornet cone packages (200) and turns the same at the end of the first conveyor belt (30), disk motor (80) rotating the semicircle disk (70), a second conveyor belt (90) which carries the cornet cone packages (201) turned by the semicircle disk (70), lower conical crimper (100) and upper conical crimper (120) which are located at the end of the second conveyor belt (90) and which crimp the turned cornet cone packages (201) and bring them into conical cone packages (202), having reverse rotational movements, cone stacking unit (140) which stacks the conical cone packages (202) within each other, cone transmission belt (150) which pulls the conical cone packages (202) into the cone stacking unit (140) from the lower conical crimper (100) and upper conical crimper (120), and a cone holder (160) which keeps the conical cone packages (202) within each other on the cone transmission belt (150).

In the production machine of the invention the specifically shaped cornet cone packages (200) are stacked on top of each other on the package fixing bottom set (10) in order to bring them into cone form. Cornet cone packages (200) stacked on top of each other on the package fixing bottom set (10) are held by means of package fixing side set (20) from their side surfaces. The package fixing side set (20) has the side adjustment arm (21) which provides for the width adjustment.

There is a first conveyor belt (30) with linear motion which carries the cornet cone packages (200) by pulling them individually on the lower surface of the package fixing bottom set (10). Said first conveyor belt (30) moves linearly by means of the conveyor drive gear (40) which is located at both ends and which makes a rotational movement.

A package transmission upper system (50) is connected on the first conveyor belt (30) which advances the cornet cone packages (200) on the first conveyor belt (30). Said package transmission upper system (50) has free-rotating disks (51). The disks (51) rotate freely on the first conveyor belt (30) and provide that the cornet cone packages (200) are advanced on the first conveyor belt (30). There is at least one package holder (60) under the first conveyor belt (30) as well. The package holder (60) supports the cornet cone packages (200) from under the first conveyor belt (30). Thereby the cornet cone packages (200) are carried on the first conveyor belt (30) such that they are between the package transmission upper system (50) and the package holder (60).

At the end of the first conveyor belt (30), there is at least one semicircle disk (70) which holds and turns the cornet cone packages (200). Said semicircle disk (70) makes a rotational movement by means of the disk motor (80). The semicircle disk (70) forms the desired gaps between the cornet cone packages (200) that are transferred from the first conveyor belt (30) by contacting the cornet cone packages (200) at certain time intervals as per its semicircle shape and the cornet cone packages (201) turned in this manner are transferred to the lower conical crimper (100) and upper conical crimper (120) without interlapping and disrupting the operation of the production machine.

The cornet cone packages (201) turned with the semicircle disk (70) are carried on the second conveyor belt (90) which has been positioned perpendicularly to the first conveyor belt (30). The semicircle disk (70) pulls the cornet cone packages (200) that are transferred from the first conveyor belt (30) from the sides by contacting them at certain intervals and drops the turned cornet cone packages (201) to the second conveyor belt (90).

At the end of the second conveyor belt (90), there is a lower conical crimper (100) and upper conical crimper (120) which crimp the turned cornet cone packages (201) and bring them into conical cone packages (202). Said lower conical crimper (100) and upper conical crimper (120) make reverse rotational movements from each other by means of the lower conical crimper motor (110) and the upper conical crimper motor (130), respectively. At the same time, the lower conical crimper (100) presses the turned cornet cone packages (201) that come between the lower conical crimper (100) and upper conical crimper (120) at certain intervals and when the cornet cone package (201) is brought to a conical cone package (202) by being crimped move in a downward direction.

At the end of the second conveyor belt (90) there is a cone stacking unit (140) which provides that the conical cone packages (202) are stacked within each other. Said cone stacking unit (140) has a cone transmission belt (150) that pulls the conical cone packages (202) from the lower conical crimper (100) and upper conical crimper (120) into the cone stacking unit (140). The conical cone packages (202) are held within each other on the cone transmission belt (150) by means of the cone holder (160).

The conical cone packages (202) produced by means of the lower conical crimper (100) and the upper conical crimper (120) are pulled by means of the cone transmission belt (150) and held on the cone holder (160). The conical cone packages (202) fall into the cone stacking unit (140) as stacked within each other at the desired amount after passing the cone holder (160) length. Depending on the size length of the cone holder (160) the number of the conical cone packages (202) desired to be stacked within each other can be adjusted.

*The working principle of the production machine according to the invention is as follows;*

The specifically shaped cornet cone packages (200) are stacked on top of each other on the package fixing bottom set (10) and advanced on the first conveyor belt (30) by means of the package transmission upper system (50) and package holder (60).

The cornet cone packages (200) arriving at the end of the first conveyor belt (30) are turned on the second conveyor belt (90) at certain intervals by means of the semicircle disk (70) which makes a rotational movement.

The turned cornet cone packages (201) are brought to a conical cone package (202) by being crimped by means of the lower conical crimper (100) and upper conical crimper (120) which make reverse rotational movements from each other located at the end of the second conveyor belt (90).

The conical cone packages (202) are pulled from the lower conical crimper (100) and upper conical crimper (120) by means of the cone transmission belt (150) and held within each other on the cone holder (160). The conical cone packages (202) fall into the cone stacking unit (140) as stacked within each other at the desired amount after passing the cone holder (160) length.

## Claims

1. A production machine which is used in producing the cornet cone packages (200) used in the packaging of cornet-type ice-creams and which provides for the cornet cone packages (200) to be vertically fed and brought into a cone shape by being crimped, ***characterized in that;*** it comprises
- a package fixing bottom set (10) which stacks the cornet cone packages (200) on top of each other,
- a first conveyor belt (30) with linear motion which carries the cornet cone packages (200) by pulling them individually on the lower surface of the package fixing bottom set (10),
- a semicircle disk (70) in the form of a half circle which is located at the end of the first conveyor belt (30), and which has a rotational movement that holds and turns the cornet cone packages (200) at certain intervals,
- a second conveyor belt (90) which is positioned perpendicularly to the first conveyor belt (30), and which carries the cornet cone packages (201) turned by the semicircle disk (70),
- lower conical crimper (100) and upper conical crimper (120) which are located at the end of the second conveyor belt (90), and which crimp the turned cornet cone packages (201) and bring them into conical cone packages (202), having reverse rotational movements,
- cone stacking unit (140) which stacks the conical cone packages (202) produced by means of the lower conical crimper (100) and upper conical crimper (120) within each other,
- cone transmission belt (150) which pulls the conical cone packages (202) into the cone stacking unit (140) from the lower conical crimper (100) and upper conical crimper (120),
- and a cone holder (160) which keeps the conical cone packages (202) within each other on the cone transmission belt (150).

2. A production machine according to Claim 1, **characterized in that**; it comprises a package fixing side set (20) which holds the cornet cone packages (200) on said package fixing bottom set (10) from side surfaces thereof.

3. A production machine according to Claim 1, **characterized in that**; it comprises a side adjustment arm (21) which provides that the width adjustment of said package fixing side set (20) is performed.

4. A production machine according to Claim 1, **characterized in that**; it comprises a conveyor drive gear (40) which has the rotational movement that moves said first conveyor belt (30) linearly.

5. A production machine according to Claim 1, **characterized in that**; it comprises a package transmission upper system (50) which is connected on said first conveyor belt (30), and which has free-rotating disks (51) that advance the cornet cone packages (200) on the first conveyor belt (30).

6. A production machine according to Claim 1, **characterized in that**; it comprises a package holder (60) which supports said cornet cone packages (200) from under the first conveyor belt (30).

7. A production machine according to Claim 1, **characterized in that**; it comprises a disk motor (80) which provides that said semicircle disk (70) makes a rotational movement.

8. A production machine according to Claim 1, **characterized in that**; it comprises a lower conical crimper motor (100) which provides that said lower conical crimper (100) makes a rotational movement.

9. A production machine according to Claim 1, **characterized in that**; it comprises an upper conical crimper motor (130) which provides that said upper conical crimper (120) makes a rotational movement.

## Patentansprüche

1. Produktionsmaschine, die zum Herstellen der Waffelhörnchenverpackungen (200) verwendet wird, welche beim Verpacken von Speiseeis vom Waffelhörnchentyp verwendet werden, und die vorsieht, dass die Waffelhörnchenverpackungen (200) vertikal zugeführt und durch Crimpen in eine Konusform gebracht werden, **dadurch gekennzeichnet, dass** sie umfasst:
- eine Verpackungsfixierungs-Bodengruppe (10), welche die Waffelhörnchenverpackungen (200) übereinander stapelt,
- ein erstes Förderband (30) mit linearer Bewegung, das die Waffelhörnchenverpackungen (200) transportiert, indem es diese einzeln an der unteren Oberfläche der Verpackungsfixierungs-Bodengruppe (10) zieht,
- eine Halbkreisscheibe (70) in Form eines halben Kreises, die an dem Ende des ersten Förderbandes (30) angeordnet ist und die eine Drehbewegung aufweist, welche die Waffelhörnchenverpackungen (200) in bestimmten Abständen hält und umlenkt,
- ein zweites Förderband (90), das im rechten Winkel zu dem ersten Förderband (30) angeordnet ist und das die Waffelhörnchenverpackungen (201), die durch die Halbkreisscheibe (70) umgelenkt wurden, transportiert,
- eine untere konische Crimpeinrichtung (100) und eine obere konische Crimpeinrichtung (120), die an dem Ende des zweiten Förderbandes (90) angeordnet sind und die, mit gegenläufigen Drehbewegungen, die umgelenkten Waffelhörnchenverpackungen (201) crimpen und diese in konische Hörnchenverpackungen (202) verwandeln,
- eine Konusstapeleinheit (140), welche die konischen Hörnchenverpackungen (202), die mittels der unteren konischen Crimpeinrichtung (100) und der oberen konischen Crimpeinrichtung (120) hergestellt wurden, ineinander stapelt,
- ein Konusüberführungsband (150), das die konischen Hörnchenverpackungen (202) von der unteren konischen Crimpeinrichtung (100) und der oberen konischen Crimpeinrichtung (120) in die Konusstapeleinheit (140) zieht,
- und eine Konusaufnahme (160), welche die konischen Hörnchenverpackungen (202) auf dem Konusüberführungsband (150) ineinander hält.

2. Produktionsmaschine nach Anspruch 1, **dadurch gekennzeichnet, dass** sie eine Verpackungsfixierungs-Seitengruppe (20) umfasst, welche die Waffelhörnchenverpackungen (200) von Seitenoberflächen derselben her auf der Verpackungsfixierungs-Bodengruppe (10) hält.

3. Produktionsmaschine nach Anspruch 1, **dadurch gekennzeichnet, dass** sie einen Seiteneinstellarm (21) umfasst, der dafür sorgt, dass die Breiteneinstellung der Verpackungsfixierungs-Seitengruppe (20) durchgeführt wird.

4. Produktionsmaschine nach Anspruch 1, **dadurch gekennzeichnet, dass** sie ein Fördererantriebsrad (40) umfasst, das die Drehbewegung aufweist, welche das erste Förderband (30) linear bewegt.

5. Produktionsmaschine nach Anspruch 1, **dadurch gekennzeichnet, dass** sie ein oberes Verpackungsüberführungssystem (50) umfasst, das an dem ersten Förderband (30) verbunden ist und das sich frei drehende Scheiben (51) aufweist, welche die Waffelhörnchenverpackungen (200) auf dem ersten Förderband (30) vorwärtsbewegen.

6. Produktionsmaschine nach Anspruch 1, **dadurch gekennzeichnet, dass** sie eine Verpackungshaltevorrichtung (60) umfasst, welche die Waffelhörnchenverpackungen (200) von unterhalb des ersten Förderbandes (30) her stützt.

7. Produktionsmaschine nach Anspruch 1, **dadurch gekennzeichnet, dass** sie einen Scheibenmotor (80) umfasst, der dafür sorgt, dass die Halbkreisscheibe (70) eine Drehbewegung ausführt.

8. Produktionsmaschine nach Anspruch 1, **dadurch gekennzeichnet, dass** sie einen Motor (100) der unteren konischen Crimpeinrichtung umfasst, der dafür sorgt, dass die untere konische Crimpeinrichtung (100) eine Drehbewegung ausführt.

9. Produktionsmaschine nach Anspruch 1, **dadurch gekennzeichnet, dass** sie einen Motor (130) der oberen konischen Crimpeinrichtung umfasst, der dafür sorgt, dass die obere konische Crimpeinrichtung (120) eine Drehbewegung ausführt.

## Revendications

1. Machine de production qui est utilisée pour fabriquer des emballages de cornets de glace (200) et qui permet d'alimenter verticalement les emballages de cornets de glace (200) et de leur donner une forme de cône par sertissage, **caractérisée en ce qu'**elle comprend :
- un ensemble de base de maintien des emballages (10) qui empile les emballages de cornets de glace (200) les uns sur les autres,
- une première bande transporteuse (30) à mouvement linéaire qui transporte les emballages de cornets de glace (200) en les tirant individuellement depuis la surface inférieure de l'ensemble de base de maintien des emballages (10),
- un disque en demi-cercle (70) prenant la forme d'un demi-cercle qui est situé à l'extrémité de la première bande transporteuse (30) et qui est doté d'un mouvement de rotation qui saisit et redirige les emballages de cornets de glace (200) à intervalles réguliers,
- une deuxième bande transporteuse (90) qui est positionnée perpendiculairement à la première bande transporteuse (30) et qui transporte les emballages de cornets de glace (201) redirigés par le disque en demi-cercle (70),
- un sertisseur conique inférieur (100) et un sertisseur conique supérieur (120) qui sont situés à l'extrémité de la deuxième bande transporteuse (90) et qui sertissent les emballages de cornets de glace (201) redirigés pour les transformer en emballages coniques (202), étant animés de mouvements de rotation inverses,
- une unité d'empilage de cônes (140) qui empile les uns dans les autres les emballages coniques (202) produits au moyen du sertisseur conique inférieur (100) et du sertisseur conique supérieur (120),
- une bande de transfert de cônes (150) qui achemine les emballages coniques (202) depuis le sertisseur conique inférieur (100) et le sertisseur conique supérieur (120) vers l'unité d'empilage de cônes (140),
- et un support de cônes (160) qui maintient les emballages coniques (202) empilés les uns dans les autres sur la bande de transfert de cônes (150).

2. Machine de production selon la revendication 1, **caractérisée en ce qu'**elle comprend un ensemble de segments de fixation d'emballages (20) qui maintient les emballages de cornets de glace (200) sur ledit ensemble de base de fixation d'emballages (10) par leurs surfaces latérales.

3. Machine de production selon la revendication 1, **caractérisée en ce qu'**elle comprend un bras de réglage de segments (21) qui permet d'effectuer le réglage en largeur dudit ensemble de segments de fixation d'emballages (20).

4. Machine de production selon la revendication 1, **caractérisée en ce qu'**elle comprend un pignon d'entraînement de convoyeur (40) qui est doté d'un mouvement de rotation qui déplace linéairement ladite première bande transporteuse (30).

5. Machine de production selon la revendication 1, **caractérisée en ce qu'**elle comprend un système supérieur de transfert d'emballages (50) qui est raccordé à ladite première bande transporteuse (30) et comporte des disques à rotation libre (51) qui avancent les emballages de cornets de glace (200) sur la première bande transporteuse (30).

6. Machine de production selon la revendication 1, **caractérisée en ce qu'**elle comprend un support d'emballages (60) qui soutient lesdits emballages de cornets de glace (200) depuis le dessous de la première bande transporteuse (30).

7. Machine de production selon la revendication 1, **caractérisée en ce qu'**elle comprend un moteur de disque (80) qui permet d'imprimer un mouvement de rotation audit disque en demi-cercle (70).

8. Machine de production selon la revendication 1, **caractérisée en ce qu'**elle comprend un moteur de sertisseur conique inférieur (100) qui permet d'imprimer un mouvement de rotation audit sertisseur conique inférieur (100).

9. Machine de production selon la revendication 1, **caractérisée en ce qu'**elle comprend un moteur de sertisseur conique supérieur (130) qui permet d'imprimer un mouvement de rotation audit sertisseur conique supérieur (120).
